# EUROPEAN PATENT SPECIFICATION

(11) **EP 2 801 426 B1**
(45) Date of publication and mention of the grant of the patent: **26.06.2019**
(21) Application number: 14167464.8
(22) Date of filing: 08.05.2014
(51) Int. Cl.: B23B 5/16

(54) **A tool for deburring and calibrating tubes and tubular components**
Werkzeug zum Entgraten und zum Kalibrieren von Rohren und rohrförmigen Komponenten
Outil d'ébarbage et d'étalonnage pour les tubes et les éléments tubulaires.

(30) Priority: 10.05.2013 IT PD20130128
(43) Date of publication of application: 12.11.2014
(73) Proprietor: Ingotools S.R.L., 25065 Lumezzane (BS) (IT)
(72) Inventor: Bossini, Martino, I-25065 LUMEZZANE (BS) (IT)
(74) Representative: Locas, Davide

(56) References cited:
- EP-A1- 0 625 397
- EP-A1- 0 922 518
- EP-A1- 2 364 802
- US-A- 1 474 798

## Description

The invention relates to a tool for deburring and calibrating tubes and tubular components extending predominantly longitudinally in general.

Tools for deburring and calibrating multi-layer tubes are known in the relevant technical sector.

These tubes are widely used in various technical sectors, especially for hydraulic applications.

In order to enable these tubes to be correctly applied to couplings, terminals or other connection points, it is useful to deburr and calibrate the free end of the tube to be connected.

For that purpose, use is made of tools able to deburr the edge of the tube by means of a cutting member and to calibrate the tube by means of a head of predetermined diameter which may be inserted within the tube and thus calibrate it.

Both operations are carried out by moving the tool in rotation with respect to the tube, said rotation being provided by means of a handle disposed at a free end of the tool opposite the calibration head and the cutting member.

An example of such a tool is disclosed in European Patent EP 0 625 397.

As an alternative to the handle, a connection head, which may be associated with a handling key, may be provided as is disclosed in European Patent Application EP 0 922 518.

The rotation of these tools nevertheless entails some difficulties for the operator, as several complete rotations of the tool with respect to the tube are needed to widen it out in an optimum way.

It will therefore be appreciated that, in order to carry out a complete rotation, the operator has to grip and release the tool several times, which operation requires a degree of physical force and may also lead to inaccurate machining, as regards both deburring and calibration, as a result of the continuous relative movements between the tube and a tool.

The technical problem underlying the present invention is one of providing a tool for deburring and calibrating tubes which is structurally and functionally designed to remedy all the drawbacks discussed with respect to the cited prior art.

This problem is resolved by a tool for deburring and calibrating tubes and tubular components extending predominantly longitudinally according to claim 1.

Preferred features of the invention are disclosed in the dependent claims.

The present invention enables accurate and efficient machining of tubes and other tubular components without requiring a particular effort by the operator.

The features and further advantages of the invention will become clear from the following detailed description of a preferred but not exclusive embodiment thereof, shown by way of non-limiting example in the appended drawings, in which:
- Figs. 1A and 1B are both lateral views, of a non-assembled configuration and an assembled configuration respectively, of a deburring and calibrating tool of the present invention together with a tube to be machined;
- Fig. 2 is an exploded lateral view, partially in section, of a first embodiment of the tool of the present invention;
- Figs. 2A and 2B are both front views of an abutment member and a locking member respectively of the tool of Fig. 2;
- Figs. 3, 3A, 3B and 3C are respectively a front view, a lateral view, a lateral section and a relative detail of the abutment member of Figs. 2 and 2A;
- Fig. 4 is an exploded lateral view, partially in section, of a second embodiment of the tool of the present invention;
- Fig. 4A is a front view of an abutment member of the tool of Fig. 4;
- Figs. 5, 5A, 5B and 5C are respectively a front view, a lateral view, a lateral section and a relative detail of the abutment member of Figs. 4 and 4A;
- Figs. 6, 6A and 6B are respectively a lateral view, a front view and a lateral section of a main body of the tool of Fig. 4;
- Figs. 7A and 7B are both lateral views, of a non-assembled configuration and an assembled configuration respectively, of a third embodiment of the deburring and calibrating tool of the present invention together with a tube to be machined;
- Fig. 8 is an exploded lateral view of a fourth embodiment of the tool of the present invention;
- Figs. 9A and 9B are both lateral views, of a non-assembled configuration and an assembled configuration respectively, of a fifth embodiment of the deburring and calibrating tool of the present invention together with a tube to be machined.

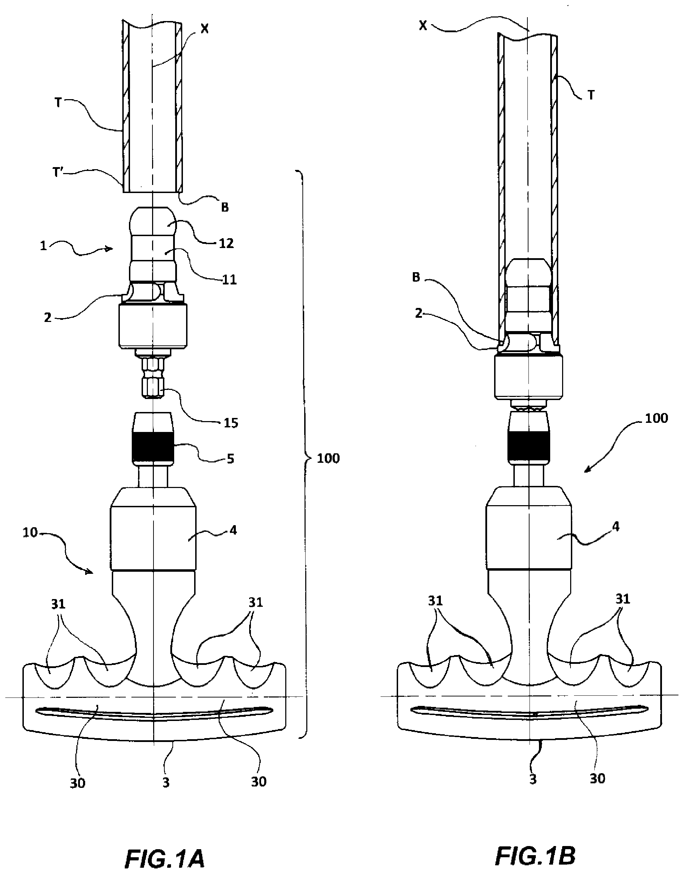

Referring initially to Figs. 1A and 1B, a tool for deburring and calibrating tubes T and tubular components extending predominantly longitudinally in general of the present invention is shown overall by reference numeral 100.

In the drawings, the axis of longitudinal extension of the tube T is shown by the letter X. The tube T, for instance of the multi-layer type, has a predominantly longitudinal extension along a longitudinal axis X.

The tool 100 comprises a support structure 1, shown overall by reference numeral 1, in which a calibration portion 12 is provided and is inserted within the tube T during machining.

In more detail, the calibration portion 12, which is shaped as a widened head in the present embodiment, is inserted in a free end T' of the tube T. The calibration portion 12 also has a calibrated diameter or, in other words, has dimensions such as to cause a deformation of the end T' of the tube T in such a way as to provide it with a circular shape with an accurately measured and predetermined diameter.

The support member 1 also supports a cutting member 2 disposed such that when the tube T is inserted in the calibration portion 12 it acts on an edge B of the free end T'.

In this way, the rotation of the cutting member 2 about the axis X, for instance in a rigid manner with the support member 1, makes it possible to carry out a deburring operation on the edge B.

Again with reference to Figs. 1A and 1B, according to a preferred embodiment, the calibration portion 12 is supported on the support member 1 by means of a stem 11 whose diameter is smaller than the calibration portion so as not to impede its rotation and therefore its calibration action.

The support member 1 is also connected to an actuation device 10 whose rotation about the axis X makes it possible to rotate the cutting member 12, in particular in a working direction of the member 12, in accordance with methods which will be described in further detail below. In that respect, it should be borne in mind that the cutting member 12 is able to act on the edge B only if rotated in that working direction.

According to a preferred embodiment, the actuation device 10 may be detachably connected to the support structure 1 and may be engaged on a connection head 15 of the support member 1, rigid with the cutting member 2. By way of example, the connection head 15 may have a hexagonal extension, which may be engaged in a corresponding seat (not shown) provided in an end 5 of the actuation device.

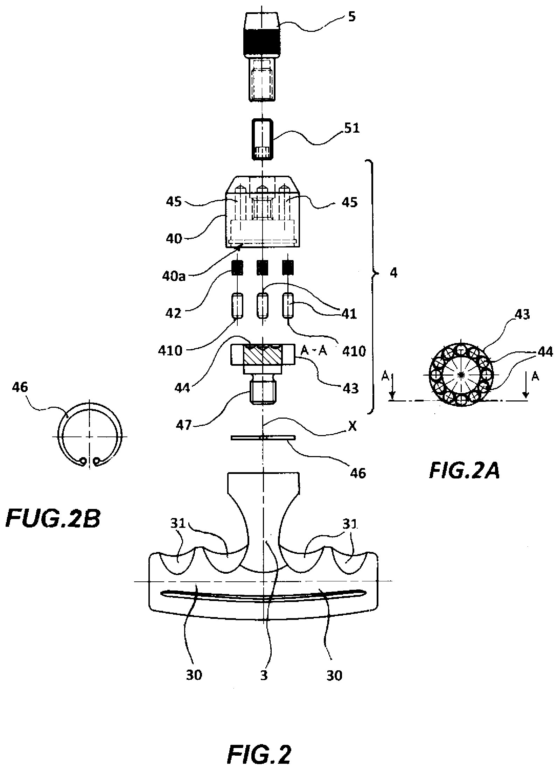

Referring now to Fig. 2, the actuation device 10 comprises a handle portion 3 and unidirectional engagement means 4 which will be described in detail below.

The handle portion 3 is shaped in such a way that it can be effectively gripped and a torque readily transmitted to the tool when rotated by hand. To that end, the handle portion 3 advantageously comprises transverse extensions 30, extending in a direction substantially perpendicular to the axis X, on which a plurality of grooves 31, preferably numbering four, are provided and form ergonomic impressions in which the fingers of a hand may be readily placed.

The unidirectional engagement means 4 comprise a ratchet designed to cause the cutting member 2 to move in rotation about the axis X of the handle portion 3 when rotated in a first direction of rotation, corresponding to the working direction of the cutting member 2.

Vice versa, when rotated in the opposite direction, the ratchet enables the free rotation of the handle portion 3 with respect to the cutting member 2.

The unidirectional engagement means 4 and the relative ratchet are illustrated in detail in Fig. 2.

They comprise a main body 40 of substantially cylindrical shape with a main cavity 40a designed to house an abutment member 43 in a rotary manner, which member is also axially symmetrical with respect to the axis X.

The ratchet of the unidirectional engagement means 4 comprises one or a plurality of engagement members 41 - three in the present embodiment - moving with respect to the main body 40 in a direction parallel to the axis X.

The engagement members 41 preferably have a cylindrical shape and are housed in a sliding manner in respective seats 45 defined in the main body 40.

The abutment member 43 further comprises a plurality of recesses 44 in which an end 410 of the engagement members 41 may be inserted. The engagement members 41 and the recesses 44 are shaped such that the former may be engaged in one of the recesses when the abutment member 43 is rotated in one direction with respect to the main body 40 and may be disengaged from the recess 44 when rotated in the opposite direction.

The engagement members 41 are preferably also associated with respective resilient means 42, for instance helical springs also housed in the seats 45, which make it possible to urge the engagement members 41 towards the abutment member 43.

The abutment member 43 is thus retained in the cavity 40a of the main body by means of a locking member 46, formed for instance by a Seeger ring.

As a result, when the abutment member 43 is positioned in the main body 40, the ends 410 of the engagement members are urged by the resilient means 42 against a surface of the abutment member in which the recesses 44 are provided.

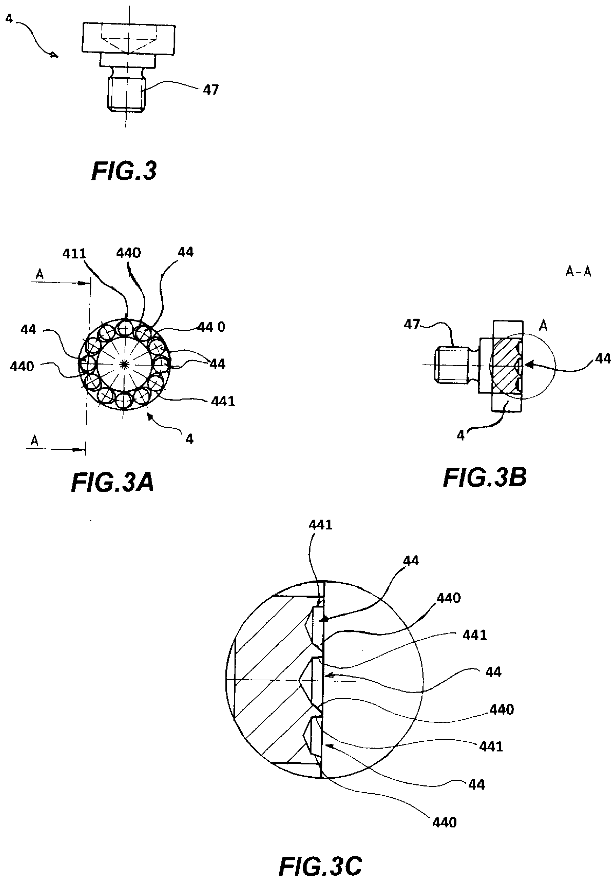

The recesses 44, shown in further detail in Figs. 3 to 3C, comprise an abutment surface 441 disposed in such a way as to abut on the end 410 of the engagement members 41 when the abutment member 43 is rotated in one direction with respect to the main body 40, and an inclined surface 440 on which the end 410 slides when the abutment member 43 is rotated in the opposite direction.

According to a first embodiment, the recesses 44 are defined by a plurality of cylindrical blind holes disposed as a ring around the axis X.

The holes 44 are bevelled along an arc of the circumference defined by the hole. The bevel faces in the direction defined by the direction of free rotation of the handle portion 3.

In this way, an inclined surface 440 is provided on which the abutment members slide.

The abutment surface 441 is defined by a lateral portion of the hole 44 diametrically opposite the bevel defining the inclined surface 440.

In this way, the cylinders forming the abutment members may be disengaged from the respective recesses 44 when they are rotated towards the inclined surface, and may engage with the successive recess after an appropriate rotation of the handle portion.

In contrast, as the lateral wall of the abutment member 3 is parallel to the abutment surface 441, the rotation of the handle portion 3 in that direction will entail a rotation of the main body as well and, in turn, of the cutting member 2 as the abutment member 3 is retained in the respective recess 44 by the action of the resilient means.

The actuation device 10 may be advantageously assembled, as well as by the above-mentioned Seeger ring 46, by means of a threaded portion 47 which joins the unidirectional engagement means 4 and the handle portion 3. Similarly, the end 5 provided with a seat may also be connected to the main body 4 by means of a screw 51 or like coupling device.

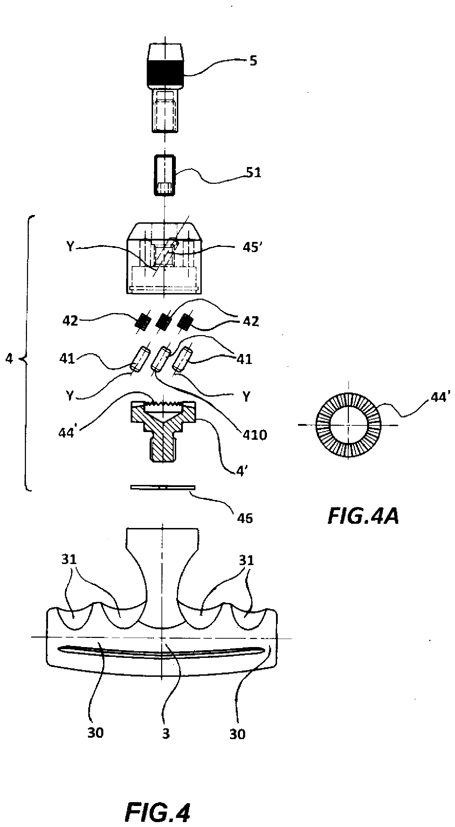

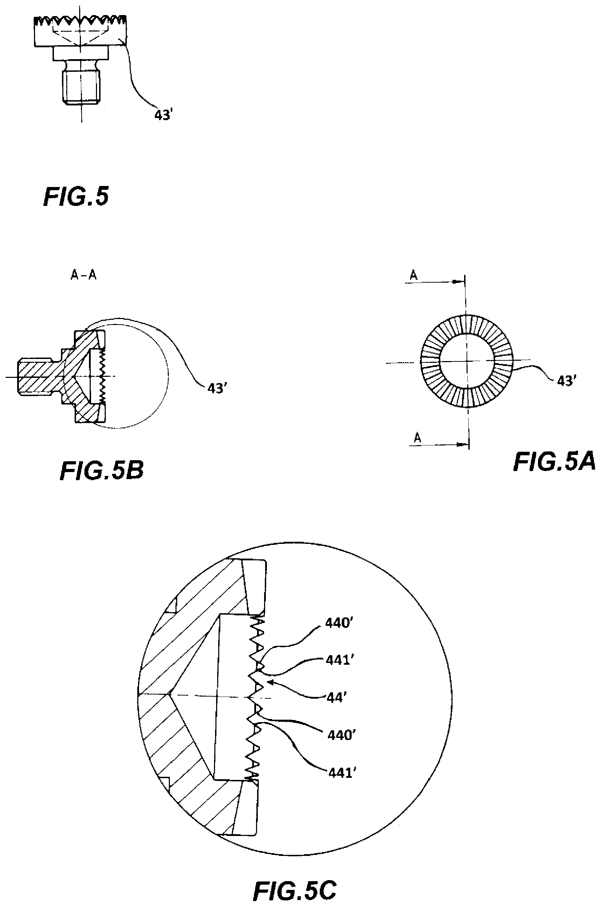

Figs. 4, 5 and 6 show a second embodiment of the tool of the present invention.

The tool 100 illustrated in these Figures differs from the previous embodiment in that the unidirectional engagement means 4 have recesses 44' defined by a plurality of teeth which extend as a ring around the axis of rotation X.

The abutment surfaces 441' and the inclined surfaces 440' are formed in this case by opposite surfaces of the teeth. It will be appreciated in this respect that the abutment surfaces 441' are also inclined in the present embodiment.

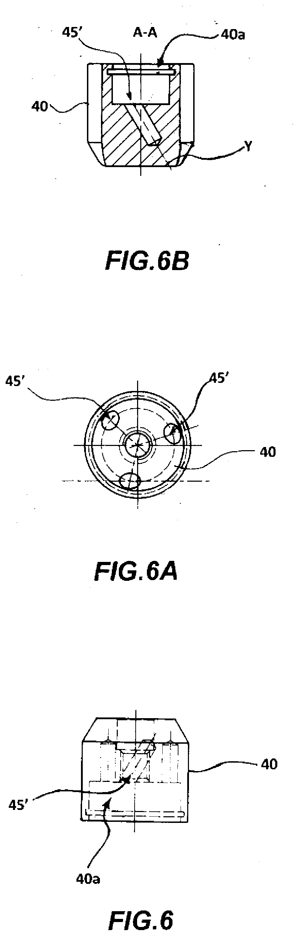

As shown in Fig. 4, in the present embodiment the engagement members 41 may move along an axis Y inclined with respect to the axis of rotation X. To that end, the seats 45' are also oriented along the axis Y, as shown in Fig. 6.

This configuration manages to ensure a more fluid and precise movement of the handle portion 3 when it is rotated in the direction of free rotation.

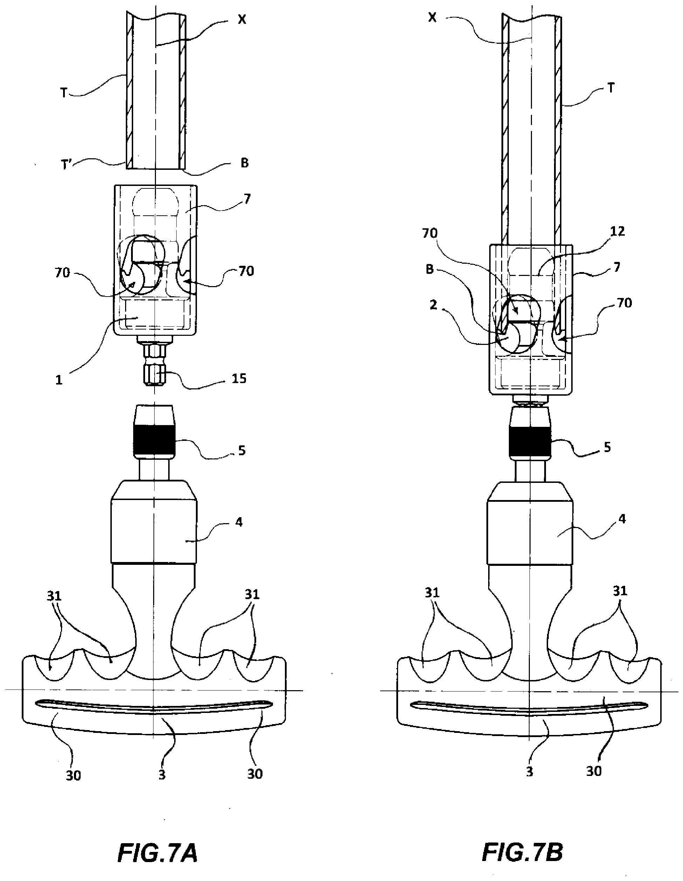

According to a further embodiment, also comprising external chamfering of the tube T, shown in Figs. 7A and 7B, the tool of the present invention further comprises a protective jacket 7 secured to the support structure, designed to receive the end T' of the tube T and disposed at least partially to cover the cutting member.

As can be seen from Fig. 7B, the tube T is thus inserted between the calibration portion 12 and the jacket 7.

The use of the jacket 7 makes it possible to protect the operator's hands when using the tool 100. In order to enable the shavings formed during the deburring operation to be discharged, the jacket 7 preferably comprises one or a plurality of openings 70.

In the present embodiment, moreover, the cutting member 2 has a different shape in comparison with the previous embodiments in order to enable the external chamfering of the tube T.

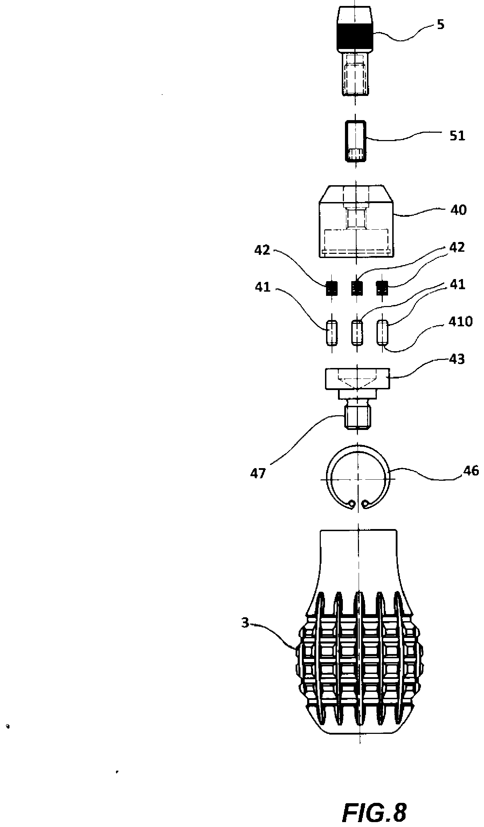

A further embodiment of the tool of the present invention is shown in Fig. 8. This embodiment differs from the first embodiment described in terms of the shape of the handle portion which is formed in this case as a knob 3'.

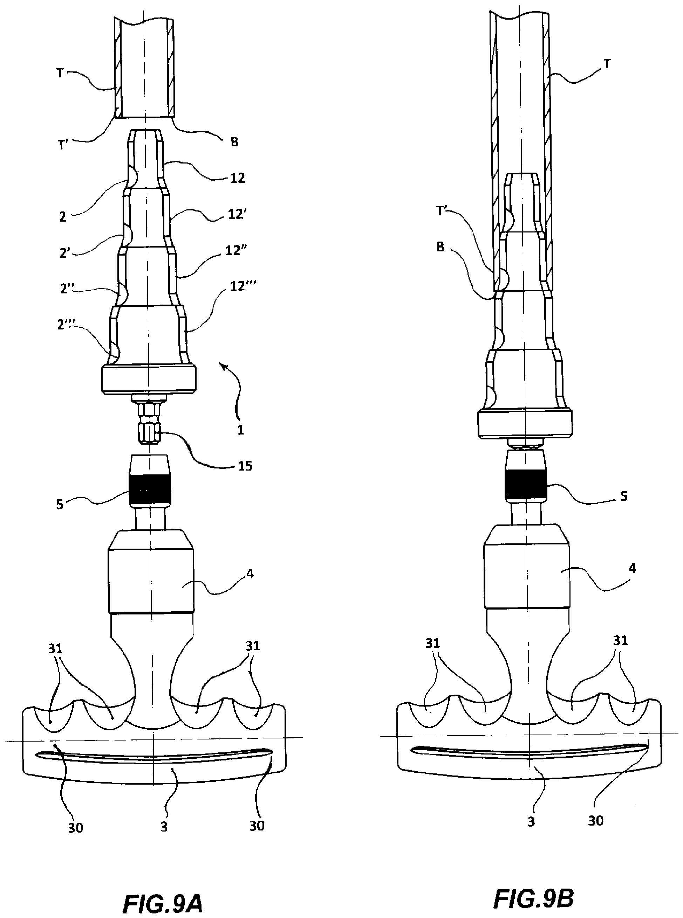

With reference to Figs. 9A and 9B, in a fourth embodiment of the tool 100 the support structure 1 comprises a plurality of calibration portions 12, 12', 12", 12"'. The calibration portions 12, 12', 12", 12'" have different diameters and are disposed concentric to one another and axially offset. Each calibration portion 12, 12', 12", 12'" is associated with a respective cutting member 2, 2', 2", 2'" so as to be able to process tubes of different diameters using the same tool.

The invention thus resolves the stated problem and at the same time provides a number of advantages. The tool of the present invention makes it possible in practice to maintain a constant grip both on the handle portion and on the tube, so as to ensure accurate processing and at the same time minimise the effort required of the operator.

The tool of the present invention may also be readily embodied and its components are simple to assemble.

## Claims

1. A tool (100) for deburring and calibrating tubes (T) and tubular components extending predominantly longitudinally along a longitudinal axis (X) in general, comprising:
▪ a support structure (1) designed to support the tube (T) and comprising a calibration portion (12) designed to be inserted in the tube (T),
▪ a cutting member (2) connected to the support structure (1) and designed to carry out tooling at an edge (B) of an open end (T') of the tube (T),
▪ an actuation device (10) connected or connectable to the cutting member (2) and designed to cause the cutting member (2) to move in rotation about the axis (X), said actuation device (10) comprising a handle portion (3) and unidirectional engagement means (4),
**characterized in that** the unidirectional engagement means (4) comprise a ratchet (41, 44) designed to cause the cutting member (2) to move in rotation about the axis (X) of the handle portion (3) when rotated in a first direction of rotation, and to allow the handle portion (3) to rotate freely with respect to the cutting member (2) when rotated in the opposite direction, wherein the unidirectional engagement means (4) comprise a main body (40) and an abutment member (43) connected in a rotary manner to the main body (40), said ratchet comprising one or a plurality of engagement means (41) connected to the main body (40) which may be engaged in a recess (44; 44') defined in said abutment member (43) when said abutment member (43) is caused to rotate in one direction with respect to said main body (40) and may be disengaged from said recess (44, 44') when rotated in the opposite direction, said recess (44; 44') further comprising an abutment surface (441; 441') disposed so as to abut against an end (410) of said engagement member(s) (41) when said abutment member (43) is caused to rotate in one direction with respect to the main body (40), and an inclined surface (440; 440') on which said end (410) slides when the abutment member (43) is caused to rotate in the opposite direction with respect to said main body.

2. A tool (100) according to claim 1, wherein said one or plurality of
engagement members (41) may move with respect to said main body (40) with at least one component of motion parallel to the axis of rotation (X), said unidirectional engagement means further comprising resilient means (42) designed to urge the engagement members (41) towards the abutment member (43).

3. A tool (100) according to claim 1, wherein the recesses (44) are
defined by cylindrical blind holes having a bevel along an arc of a circumference defined by the hole, said bevel facing in the direction defined by the direction of free rotation of the handle portion (3) and being designed to define said inclined surface (440).

4. A tool (100) according to claim 1, wherein the recesses (44') are
defined by a plurality of teeth which extend as a ring around the axis of rotation (X).

5. A tool (100) according to claim 4, wherein the engagement
member(s) (44') is/are movable along an axis (Y) inclined with respect to the axis of rotation (X).

6. A tool (100) according to any one of the preceding claims, wherein
the engagement member(s) (44; 44') are housed in respective seats (45; 45') defined in the main body (40).

7. A tool (100) according to any one of the preceding claims, further
comprising a protective jacket (7) secured to the support structure (1), designed to receive the end (T') of the tube (T) and disposed at least partially to cover the cutting member (2).

8. A tool (100) according to any one of the preceding claims, wherein
the handle portion (3) comprises transverse extensions (30), extending in a direction substantially perpendicular to the axis (X), on which a plurality of grooves (31) are provided and form ergonomic impressions designed to house the fingers of a hand.

9. A tool (100) according to any one of the preceding claims, wherein
the handle portion comprises a connection member (5) which may be detachably connected to a connection head (15) rigid with the cutting member (2).

10. A tool (100) according to any one of the preceding claims, wherein
the support structure (1) comprises a plurality of calibration portions (12, 12', 12", 12'"), said calibration portions (12, 12', 12", 12'") having different diameters and being concentric with one another and further comprising at least one cutting member (2, 2', 2", 2'") associated with a respective calibration portion (12, 12', 12", 12"').

## Patentansprüche

1. Werkzeug (100) zum Entgraten und Kalibrieren von Rohren (T) und rohrförmigen Komponenten, die sich vorwiegend in Längsrichtung im Wesentlichen entlang einer Längsachse (X) erstrecken, umfassend:
- eine Stützstruktur (1), die eingerichtet ist, um das Rohr (T) abzustützen, und einen Kalibrierungsbereich (12) aufweist, der eingerichtet ist, um in das Rohr (T) eingesetzt zu werden,
- ein Schneidelement (2), das mit der Stützstruktur (1) verbunden ist, und eingerichtet ist, um eine Werkzeugbestückung an einer Kante (B) eines offenen Endes (T') der Röhre (T) auszuführen,
- eine Betätigungsvorrichtung (10), die mit dem Schneidelement (2) verbunden oder verbindbar ist, und eingerichtet ist, um zu bewirken, dass sich das Schneidelement (2) drehend um die Achse (X) bewegt, wobei die Betätigungsvorrichtung (10) einen Griffbereich (3) und unidirektionale Eingriffseinrichtungen (4) aufweist,
**dadurch gekennzeichnet, dass** die unidirektionalen Eingriffseinrichtungen (4) eine Ratsche (41, 44) aufweisen, die eingerichtet ist, um zu bewirken, dass sich das Schneidelement (2) drehend um die Achse (X) des Griffbereichs (3) beim Drehen in eine erste Drehrichtung bewegt, und um es dem Griffbereich (3) zu ermöglichen, sich frei in Bezug auf das Schneidelement (2) beim Drehen in die entgegengesetzte Richtung zu drehen, wobei die unidirektionalen Eingriffseinrichtungen (4) einen Hauptkörper (40) und ein Anlageelement (43) aufweisen, das drehbar mit dem Hauptkörper (40) verbunden ist, wobei die Ratsche eine oder mehrere Eingriffseinrichtungen (41) aufweist, die mit dem Hauptkörper (40) verbunden sind, die mit einer Aussparung (44; 44'), die im Anlageelement (43) ausgebildet ist, in Eingriff stehen können, wenn bewirkt wird, dass sich das Anlageelement (43) in eine Richtung bezüglich des Hauptkörpers (40) dreht und von der Aussparung (44, 44') beim Drehen in die entgegengesetzte Richtung ausgerückt werden kann, wobei die Aussparung (44; 44') ferner eine Anlagefläche (441; 441') aufweist, die so angeordnet ist, um an einem Ende (410) des Eingriffselements (der Eingriffselemente) (41) anzuliegen, wenn bewirkt wird, dass sich das Anlageelement (43) in eine Richtung bezüglich des Hauptkörpers (40) dreht, und eine geneigte Fläche (440; 440') aufweist, auf dem das Ende (410) gleitet, wenn bewirkt wird, dass sich das Anlageelement (43) in die entgegengesetzte Richtung bezüglich des Hauptkörpers dreht.

2. Werkzeug (100) nach Anspruch 1,
- wobei das eine oder die Mehrzahl von Eingriffselementen (41) sich in Bezug auf den Hauptkörper (40) mit mindestens einer Bewegungskomponente parallel zur Drehachse (X) bewegen können, wobei die unidirektionalen Eingriffseinrichtungen (41) ferner elastischen Mittel (42) aufweisen, die eingerichtet sind, um die Eingriffselemente (41) in Richtung des Anlageelements (43) vorzuspannen.

3. Werkzeug (100) nach Anspruch 1,
- wobei die Aussparungen (44) durch zylindrische Sacklöcher mit einer Abschrägung entlang eines Bogens eines Umfangs ausgebildet sind, der durch das Loch ausgebildet ist, wobei die Abschrägung der Richtung zugewandt ist, die durch die Richtung einer freien Drehung des Griffbereichs (3) definiert ist, und eingerichtet ist, um die geneigte Fläche (440) zu bilden.

4. Werkzeug (100) nach Anspruch 1,
- wobei die Aussparungen (44') durch eine Mehrzahl von Zähnen ausgebildet sind, die sich als Ring um die Drehachse (X) erstrecken.

5. Werkzeug (100) nach Anspruch 4,
- wobei das (die) Eingriffselement (Eingriffselemente) (44') entlang einer Achse (Y) bewegbar ist / sind, die in Bezug auf die Drehachse (X) geneigt ist.

6. Werkzeug (100) nach einem der vorhergehenden Ansprüche, wobei das Eingriffselement (die Eingriffselemente) (44; 44') in jeweiligen Sitzen (45; 45"), die im Hauptkörper (40) ausgebildet sind, aufgenommen ist (sind).

7. Werkzeug (100) nach einem der vorhergehenden Ansprüche, das ferner einen Schutzmantel (7) aufweist, der an der Stützstruktur (1) befestigt ist, der zur Aufnahme des Endes (T') der Röhre (T) eingerichtet ist und der angeordnet ist, um zumindest teilweise das Schneidelement (2) abzudecken.

8. Werkzeug (100) nach einem der vorhergehenden Ansprüche, wobei der Griffbereich (3) Querverlängerungen (30) aufweist, die sich in eine Richtung erstrecken, die im Wesentlichen senkrecht zur Achse (X) ist, auf dem eine Mehrzahl von Nuten (31) vorgesehen sind und ergonomische Eindrücke bilden, die eingerichtet sind, um die Finger einer Hand aufzunehmen.

9. Werkzeug (100) nach einem der vorhergehenden Ansprüche, wobei der Griffbereich ein Verbindungselement (5) aufweist, das entfernbar mit einem Verbindungskopf (15) verbunden ist, der starr mit dem Schneidwerkzeug (2) verbunden ist.

10. Werkzeug (100) nach einem der vorhergehenden Ansprüche, wobei die Stützstruktur (1) eine Mehrzahl von Kalibrierungsbereichen (12, 12', 12", 12"') aufweist, wobei die Kalibrierungsbereiche (12, 12', 12", 12"') unterschiedliche Durchmesser aufweisen und konzentrisch zueinander sind und ferner mindestens ein Schneidelement (2, 2', 2", 2'") aufweisen, das mit einem entsprechenden Kalibrierungsbereich (12, 12', 12", 12"') verbunden ist.

## Revendications

1. Outil (100) pour ébarber et étalonner des tubes (T) et composants tubulaires s'étendant de manière principalement longitudinale le long d'un axe longitudinal (X) en général, comprenant :
- une structure de support (1) conçue pour supporter le tube (T) et comprenant une portion d'étalonnage (12) conçue pour être insérée dans le tube (T),
- un élément de découpe (2) relié à la structure de support (1) et conçu pour réaliser un usinage au niveau d'un bord (B) d'une extrémité ouverte (T') du tube (T),
- un dispositif d'actionnement (10) relié ou pouvant être relié à l'élément de découpe (2) et conçu pour amener l'élément de découpe (2) à se déplacer en rotation autour de l'axe (X), ledit dispositif d'actionnement (10) comprenant une portion poignée (3) et un moyen de mise en prise unidirectionnel (4),
**caractérisé en ce que** le moyen de mise en prise unidirectionnel (4) comprend un cliquet (41, 44) conçu pour amener l'élément de découpe (2) à se déplacer en rotation autour de l'axe (X) de la portion poignée (3) quand il tourne dans une première direction de rotation, et pour permettre à la portion poignée (3) de tourner librement par rapport à l'élément de découpe (2) quand il tourne dans la direction opposée, dans lequel le moyen de mise en prise unidirectionnel (4) comprend un corps principal (40) et un élément de butée (43) relié de manière rotative au corps principal (40), ledit cliquet comprenant un ou plusieurs moyens de mise en prise (41) reliés au corps principal (40) qui peuvent venir en prise dans un évidement (44 ; 44') défini dans ledit élément de butée (43) quand ledit élément de butée (43) est amené à tourner dans une direction par rapport audit corps principal (40) et peuvent se désolidariser dudit évidement (44, 44') quand il tourne dans la direction opposée, ledit évidement (44 ; 44') comprenant en outre une surface de butée (441 ; 441') disposée de manière à venir buter contre une extrémité (410) dudit ou desdits éléments de mise en prise (41) quand ledit élément de butée (43) est amené à tourner dans une direction par rapport au corps principal (40), et une surface inclinée (440 ; 440') sur laquelle ladite extrémité (410) coulisse quand l'élément de butée (43) est amené à tourner dans la direction opposée par rapport audit corps principal.

2. Outil (100) selon la revendication 1, dans lequel lesdits un ou plusieurs moyens de mise en prise (41) peuvent se déplacer par rapport audit corps principal (40) avec au moins une composante de mouvement parallèle à l'axe de rotation (X), ledit moyen de mise en prise unidirectionnel comprenant en outre un moyen élastique (42) conçu pour pousser les éléments de mise en prise (41) vers l'élément de butée (43).

3. Outil (100) selon la revendication 1, dans lequel les évidements (44) sont définis par des trous borgnes cylindriques ayant un biseau le long d'un arc d'une circonférence définie par le trou, ledit biseau étant tourné dans la direction définie par la direction de rotation libre de la portion poignée (3) et étant conçu pour définir ladite surface inclinée (440).

4. Outil (100) selon la revendication 1, dans lequel les évidements (44') sont définis par une pluralité de dents qui s'étendent selon un anneau autour de l'axe de rotation (X).

5. Outil (100) selon la revendication 4, dans lequel le ou les éléments de mise en prise (44') est/sont mobiles le long d'un axe (Y) incliné par rapport à l'axe de rotation (X).

6. Outil (100) selon l'une quelconque des revendications précédentes, dans lequel le ou les éléments de mise en prise (44 ; 44') sont logés dans des sièges (45 ; 45') respectifs définis dans le corps principal (40).

7. Outil (100) selon l'une quelconque des revendications précédentes, comprenant en outre une enveloppe de protection (7) fixée à la structure de support (1), conçue pour recevoir l'extrémité (T') du tube (T) et disposée au moins partiellement pour couvrir l'élément de découpe (2).

8. Outil (100) selon l'une quelconque des revendications précédentes, dans lequel la portion poignée (3) comprend des extensions transversales (30), s'étendant dans une direction sensiblement perpendiculaire à l'axe (X), sur lesquelles une pluralité de rainures (31) se trouvent et forment des impressions ergonomiques conçues pour loger les doigts d'une main.

9. Outil (100) selon l'une quelconque des revendications précédentes, dans lequel la portion poignée comprend un élément de liaison (5) qui peut être relié de manière détachable à une tête de liaison (15) solidaire avec l'élément de découpe (2).

10. Outil (100) selon l'une quelconque des revendications précédentes, dans lequel la structure de support (1) comprend une pluralité de portions d'étalonnage (12, 12', 12", 12"'), lesdites portions d'étalonnage (12, 12', 12", 12"') ayant différents diamètres et étant concentriques les unes avec les autres et comprenant en outre au moins un élément de découpe (2, 2', 2", 2"') associé avec une portion d'étalonnage (12, 12', 12", 12'") respective.
